# EUROPÄISCHE PATENTSCHRIFT

(11) **EP 2 702 386 B1**
(45) Veröffentlichungstag und Bekanntmachung des Hinweises auf die Patenterteilung: **14.08.2019**
(21) Anmeldenummer: 12718190.7
(22) Anmeldetag: 29.04.2012
(51) Int. Cl.: G01N 1/04, G01N 1/08, G01N 1/28, G01N 35/00

(54) **STANZVORRICHTUNG MIT GREIFEINHEIT**
PUNCHING DEVICE WITH GRIPPING UNIT
DISPOSITIF DE POINÇONNAGE POURVU D'UNE UNITÉ DE PRÉHENSION

(30) Priorität: 29.04.2011 DE 102011075036
(43) Veröffentlichungstag der Anmeldung: 05.03.2014
(73) Patentinhaber: Hamilton Bonaduz AG, 7402 Bonaduz (CH)
(72) Erfinder: GIOVANOLI, Nando, CH-7457 Bivio (CH); MENZI, Reto, CH-8757 Filzbach (CH)
(74) Vertreter: Müller Hoffmann & Partner
(86) Internationale Anmeldenummer: PCT/EP2012/057872
(87) Internationale Veröffentlichungsnummer: WO 2012/146770

(56) Entgegenhaltungen:
- EP-A2- 1 804 047
- WO-A2-2010/001023
- US-A- 5 641 682
- US-A1- 2007 059 205
- US-A1- 2008 063 562

## Beschreibung

Die vorliegende Erfindung betrifft eine Stanzvorrichtung zum Verarbeiten von getrockneten auf einer Probenkarte aufgetragenen Proben, insbesondere von DNA enthaltenden Flüssigkeiten wie Blut, Speichel und dergleichen.

Bei derartigen Stanzvorrichtungen werden in einem Magazin für Probenkarten mehrere Probenkarten aufbewahrt und in einer bestimmten Reihenfolge mittels einer Greifeinheit aus dem Magazin entnommen und einem Stanzmittel der Stanzvorrichtung zugeführt. In einem zuvor mittels bildgebender Verfahren erfassten Bereich, in dem auf der Probenkarte die aufgetragene Probe ermittelt worden ist, erfolgt dann das Ausstanzen von wenigstens einem Probenstück aus der Probenkarte. Es können aus dem gleichen Probenbereich auch mehrere Probenstücke gleichzeitig oder nacheinander ausgestanzt werden. Die ausgestanzten Probenstücke werden durch Bewegung eines Stanzstifts (Stempel) durch eine Austrittsöffnung in einem Unterwerkzeug hindurch geführt und auf diese Weise in eine Aufnahmevertiefung in einem Aufnahmebehälter, vorzugsweise in einen Napf einer Mikrotiterplatte, transportiert. Sobald aus allen gewünschten Probekarten Probenstücke ausgestanzt und im Aufnahmebehälter aufgenommen worden sind, kann die Analyse der einzelnen in den Probenstücken enthaltenen Proben mittels Verfahren wie etwa PCR für DNA-Analysen, Hochdruck-Gaschromatografie (HPLC) oder ähnliches erfolgen, wobei hierzu nach dem Ausstanzen weitere Schritte durchgeführt werden, die im Rahmen der vorliegenden Anmeldung nicht detailliert beschrieben werden.

Ein Verfahren und eine Vorrichtung zum automatisierten Ausstanzen von Probenstücken aus Probenkarten ist beispielsweise aus der US 5,641,682 bekannt.

Ferner ist unter der Bezeichnung "BSD1000-GenePunch" eine Stanzvorrichtung der genannten Art der Firma BSD Robotics (a Luminex Company, in Brisbane, Queensland 4110, Australia) bekannt. Ein zugehöriger Produktflyer war zum Anmeldezeitpunkt der vorliegenden Anmeldung unter der folgenden Internetadresse verfügbar: http://www.bsdrobotics.com/Documents/Brochure/BSDR1000(10)%20-%20BSD1000%20-GenePunch.PDF.

Ferner ist die Funktionsweise dieser Stanzvorrichtung in einem Videofilm offenbart, der zum Anmeldezeitpunkt unter der folgenden Internetadresse verfügbar war: http://www.bsdrobotics.com/Videos/BSD1000.wmv.

Aus dem Videofilm ist folgende Funktionsweise ersichtlich: Bei der Stanzvorrichtung "BS-D1000-GenePunch" wird eine Greifvorrichtung für Probenkarten von einem Magazin, aus dem die Greifvorrichtung eine Probenkarte entnommen hat, entlang einer horizontal verlaufenden Schiene zu einem Scanner bewegt, in den die Probenkarte eingeführt und anschließend gescannt wird. Die Greifvorrichtung ist dabei in zwei zueinander orthogonalen Richtungen beweglich, nämlich entlang der Schiene und orthogonal zu dieser, derart, dass die ergriffene Probenkarte in ihrer Kartenebene zweidimensional verschiebbar ist. Nach dem Scannen wird die Probenkarte mittels der Greifvorrichtung zum Stanzmittel der Stanzvorrichtung transportiert und relativ zu diesem positioniert, damit ein Probenstück an der nach dem Scannen ausgewerteten Position der Probenkarte ausgestanzt werden kann. Das ausgestanzte Probenstück wird anschließend in einen unter dem Stanzmittel angeordneten Aufnahmebehälter, wie etwa einen Napf einer Mikrotiterplatte, abgegeben. Bei dieser Stanzvorrichtung sind mehrere Aufnahmebehälter sternförmig um eine zu einer horizontalen Ebene orthogonalen Drehachse angeordnet und ihre Position, insbesondere eines bestimmten Napfs, relativ zum Stanzmittel erfolgt mittels einer Drehbewegung und mittels Verschiebung in der Horizontalebene. Nachdem das Ausstanzen von einem oder mehreren Probenstücken aus einer Probenkarte abgeschlossen ist, transportiert die Greifvorrichtung die gestanzte Probenkarte entlang der Schiene zurück zum Kartenmagazin und legt diese dort wieder ab. Die Greifvorrichtung wird dann kurz zurückgezogen, bis das Kartenmagazin um eine Position nach oben verfahren worden ist, um die nächste Probenkarte aus dem Magazin entnehmen zu können.

Eine aus dem Stand der Technik bekannte Stanzvorrichtung umfasst also in allgemeinen Worten wenigstens ein Stanzmittel mit einem Stempel und einem Unterwerkzeug, wobei der Stempel zwischen einer vom Unterwerkzeug entfernten Ruhestellung und einer dem Unterwerkzeug angenäherten Stanzstellung beweglich ist, und wobei das Stanzmittel eine Aufnahmeöffnung aufweist, in welche eine Probenkarte aus einem Probenkartenbehälter mittels einer beweglichen Greifeinheit der Stanzvorrichtung einführbar und relativ zum Stanzmittel positionierbar ist, und einen mit dem Stempel des Stanzmittels koppelbaren oder gekoppelten Stanzantrieb, durch den die Bewegung des Stempels zwischen Ruhestellung und Stanzstellung angetrieben wird, wobei das Stanzmittel derart eingerichtet ist, dass ein aus der Probenkarte ausgestanztes Probenstück an einer Austrittsöffnung des Unterwerkzeugs in eine Aufnahmevertiefung eines unterhalb des Stanzmittels angeordneten Aufnahmebehälters abgegeben werden kann.

Bei der bekannten Stanzvorrichtung werden die Probenkarten durch ein Greifmittel erfasst und zum Stanzmittel transportiert. Das Greifmittel ist nur in einer Ebene beweglich, so dass unterschiedliche Probenkarten nur durch Bewegen des Magazins mit Probenkarten entnommen werden können. Ein automatisiertes Ergreifen und Transportieren von Aufnahmebehältern ist nicht möglich, da die Aufnahmebehälter manuell in die sternförmig angeordneten Aufnahmerahmen eingesetzt werden müssen.

WO2010001023 A2 und US2007059205 A1 offenbaren in drei zueinander orthogonale Hauptrichtungen bewegliche Aufnahmebehältergreifmittel.

Aufgabe der Erfindung ist es daher, eine Stanzvorrichtung der genannten Art derart weiterzubilden, dass eine optimierte Handhabung von Probenkarten und Aufnahmebehälter ermöglicht wird.

Zur Lösung dieser Aufgabe wird vorgeschlagen, dass die Greifeinheit ein Probekartenkartengreifmittel und ein Aufnahmebehältergreifmittel umfasst, welche mittels einer Antriebseinheit in drei zueinander orthogonale Hauptrichtungen gemeinsam beweglich sind. Eine derartige Ausgestaltung ermöglicht die Nutzung einer Antriebseinheit, vorzugsweise mit mehreren für den Transport in den verschiedenen Hauptrichtungen eingerichteten Antrieben, für zwei unterschiedliche Greifmittel. Hieraus ergeben sich Vorteile bei der Handhabung der Greifeinheit aufgrund der gleich anzusteuernden Antriebseinheit, was eine Vereinfachung bei der Bedienung und Programmierung darstellt. Durch die Verwendung der gemeinsamen Antriebseinheit können Kosten sowohl bei der Herstellung als auch bei der Wartung eingespart werden.

Die Aufgabe der Erfindung wird durch den unabhängigen Anspruch 1 gelöst.

Es wird vorgeschlagen, dass das Probenkartengreifmittel und das Aufnahmebehältergreifmittel einen jeweiligen Greiferantrieb aufweisen mittels welchem zugehöriger Greifer des Probenkartengreifmittels und des Aufnahmebehältergreifmittels zwischen einer Öffnungsstellung und einer Schließstellung beweglich, insbesondere verschwenkbar sind. Durch die individuellen Greiferantriebe können diese optimal für die jeweilige Greifaufgabe optimiert und eingerichtet werden, um den unterschiedlichen Anforderungen nachzukommen, die sich beim Ergreifen/Transportieren von relativ dünnen, glatten Probenkarten aus einem Magazin bzw. beim Ergreifen/Transportieren von Aufnahmebehältern, die auch mit Flüssigkeit gefüllt sein können, stellen.

Dabei ist es bevorzugt, dass das Probenkartengreifmittel, insbesondere dessen zugehörige Greifer, mittels des zugehörigen Greiferantriebs um eine Schwenkachse verschwenkbar ist/sind, derart, dass es zwischen einer dem Probekartenbehälter zugewandten Lade-/Entladestellung und einer vom Probenkartenbehälter abgewandten Wartestellung verschwenkbar ist.

Hierzu wird weiterbildend vorgeschlagen, dass das Probekartengreifmittel ferner in eine zwischen der Lade-/Entladestellung und der Wartestellung liegende Stanzstellung verschwenkbar ist, in welcher eine durch die zugehörigen Greifer ergriffene Probenkarte dem Stanzmittel zuführbar ist.

Das Verschwenken der Greifer des Probenkartengreifmittels kann in einem Winkelbereich von etwa 180° erfolgen zwischen der Lade-/Entladestellung als Ausgangspunkt (0°), in welcher die Greifer im Wesentlichen vertikal nach unten gerichtet sind, und der Wartestellung als Endpunkt (180°), in welcher die Greifer im Wesentlichen vertikal nach oben gerichtet sind. Die dazwischenliegende Stanzstellung liegt bei etwa 90°, so dass die Greifer im Wesentlichen horizontal ausgerichtet sind. Insbesondere die Wartestellung muss nicht unbedingt bei 180° liegen, der Winkel kann auch etwas kleiner oder größer sein.

Das Probenkartengreifmittel und das Aufnahmebehältergreifmittel sind vorzugsweise derart angesteuert von einer Steuereinheit der Stanzvorrichtung, dass das Probenkartengreifmittel beim Ergreifen und Transportieren eines Aufnahmebehälters mittels des Aufnahmebehältergreifmittels in seine Wartestellung verschwenkt ist. Wesentlich bei der Wartestellung ist es, dass die Greifer des Probenkartengreifmittels in eine Position gebracht werden können, in der sie die Bewegung der Greifeinheit nicht einschränken, was insbesondere beim Ergreifen und Transportieren von Aufnahmebehältern mittels des Aufnahmebehältergreifmittels von Bedeutung ist.

Weiterbildend wird vorgeschlagen, dass die Stanzvorrichtung eine Aufnahmebehälter abstützende Aufnahmeplatte mit einer wenigstens einen Teil der Aufnahmeplatte beleuchtenden Lichtquelle aufweist, wobei die Lichtquelle derart angeordnet ist, dass wenigstens ein Teil eines auf der Aufnahmeplatte befindlichen Aufnahmebehälters, insbesondere von in ihm vorgesehenen Aufnahmevertiefungen, aus Richtung der Aufnahmeplatte, insbesondere von unten beleuchtet werden kann.

Dabei ist es bevorzugt, dass als Lichtquelle wenigstens eine Elektrolumineszenz-Folie an der Aufnahmeplatte vorgesehen ist, wobei vorzugsweise die Aufnahmeplatte eine transparente Platte, vorzugsweise Glasplatte ist, und wobei die EL-Folie vorzugsweise an der Unterseite der Aufnahmeplatte angeordnet ist.

Die Stanzvorrichtung kann ferner einen auf der Aufnahmeplatte aufliegenden, in der Plattenebene beweglichen Transportrahmen aufweisen, in welchem wenigstens ein Aufnahmebehälter aufnehmbar ist.

Die Aufnahmeplatte bildet vorzugsweise eine Abdeckung eines Gehäuses für eine Antriebseinheit, welche die Bewegung des Transportrahmens auf der Aufnahmeplatte ermöglicht, wobei vorzugsweise der Transportrahmen berührungslos mittels Magneten mit der durch die Aufnahmeplatte abgedeckten Antriebseinheit gekoppelt ist.

Die Stanzvorrichtung ist bevorzugt derart eingerichtet, dass mittels der Greifeinheit Aufnahmebehälter von Wartepositionen außerhalb der Aufnahmeplatte zu Verarbeitungspositionen auf der Aufnahmeplatte und umgekehrt transportierbar sind.

Ferner wird vorgeschlagen, dass die Greifeinheit derart ausgeführt ist, dass Aufnahmebehälter mittels der Greifeinheit zum Transportrahmen hin und von diesem weg bewegt werden können, wobei ein betreffender Aufnahmebehälter mittels des Aufnahmebehältergreifmittels beim Transport gehalten ist.

Die Stanzvorrichtung kann mit einer Dosiervorrichtung kombiniert sein, wobei die Greifeinheit an einem in einer der Hauptrichtungen beweglichen Träger angebracht ist, an welchem zusätzlich eine in den beiden anderen Hauptrichtungen bewegliche Pipettiervorrichtung der Dosiervorrichtung angebracht ist, derart, dass die Greifeinheit und die Pipettiervorrichtung entlang der einen Hauptrichtung gleichzeitig bewegt werden.

Die Erfindung wird nachfolgend beispielhaft und nicht einschränkend unter Bezugnahme auf die anliegenden Figuren beschrieben.
- Fig. 1: zeigt in einer schematischen Perspektivdarstellung eine Stanzvorrichtung in Kombination mit einer Dosiervorrichtung.
- Fig. 2: zeigt in schematischer Perspektivdarstellung die Stanzvorrichtung ohne Dosiervorrichtung und ohne Greifeinheit
- Fig. 3: zeigt in den Teilfiguren a) und b) schematisch dargestellte Probenkarten im Zustand vor dem Ausstanzen von Probenstücken (Fig. 3a) und nach dem Ausstanzen (Fig. 3b).
- Fig. 4: zeigt in vergrößerter schematischer Perspektivdarstellung eine Greifeinheit der Fig. 1
- Fig. 5: zeigt eine perspektivische schematische Darstellung eines Probekartengreifmittels und eines Aufnahmebehältergreifmittels.
- Fig. 6: zeigt eine perspektivische schematische Darstellung des Probekartengreifmittels und des Aufnahmebehältergreifmittels in anderer Stellung.
- Fig. 7: zeigt eine perspektivische schematische Darstellung des Probekartengreifmittels und des Aufnahmebehältergreifmittels in anderer Stellung.
- Fig. 8: zeigt eine andere perspektivische Darstellung des Probekartengreifmittels und des Aufnahmebehältergreifmittels.
- Fig. 9: ist eine Schnittansicht entsprechend der Schnittlinie IX-IX der Fig. 7
- Fig. 10: ist eine andere Schnittansicht entsprechend der Schnittlinie X-X der Fig. 6.

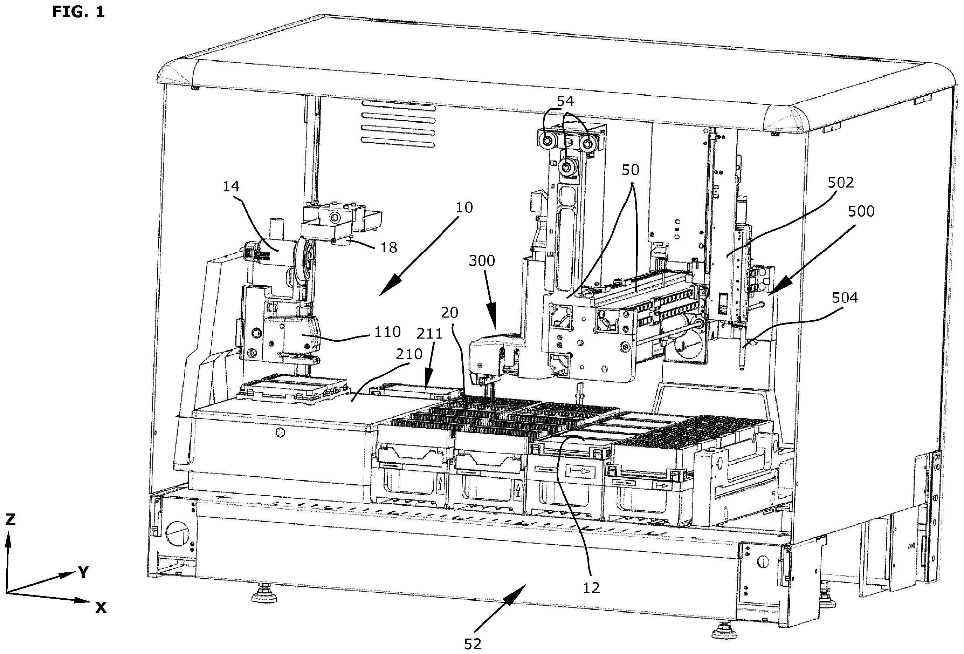

Fig. 1 zeigt eine Gesamtansicht einer Stanzvorrichtung 10, die hier in einer optionalen Weise mit einer Dosiervorrichtung 500 kombiniert ist. In der hier dargestellten Kombination nutzen die Stanzvorrichtung 10 und die Dosiervorrichtung 500 einen gemeinsamen Träger 50, der in einer der Hauptrichtungen X, Y, Z, nämlich in Längsrichtung X beweglich ist. Hierzu ist der Träger 50 im oberen Bereich einer für die Gesamtvorrichtung bereitgestellten, hier aber nur teilweise dargestellten Tragkonstruktion 52 mittels Rollen 54 an nicht dargestellten Längsschienen gelagert. Selbstverständlich ist auch eine nicht dargestellte Antriebsvorrichtung für den Träger 50 vorhanden, die über eine ebenfalls nicht dargestellte Steuereinheit der Gesamtvorrichtung ansteuerbar ist.

Die Dosiervorrichtung umfasst eine am Träger 50 in die beiden anderen Hauptrichtungen Y, Z, also die Querrichtung Y und Höhenrichtung Z, beweglich angebrachte Pipettiervorrichtung 502 mit wenigstens einem Pipettierkanal 504 zum Aspirieren und Dispensieren von Flüssigkeit in/aus bereitgestellten Aufnahmebehältern 12 bzw. einem Reservoir für die zu dosierende Flüssigkeit. Die Dosiervorrichtung 500 ist wie ein ansich bekannter Pipettierautomat ausgeführt und und soll hier nicht weiter im Detail beschrieben werden.

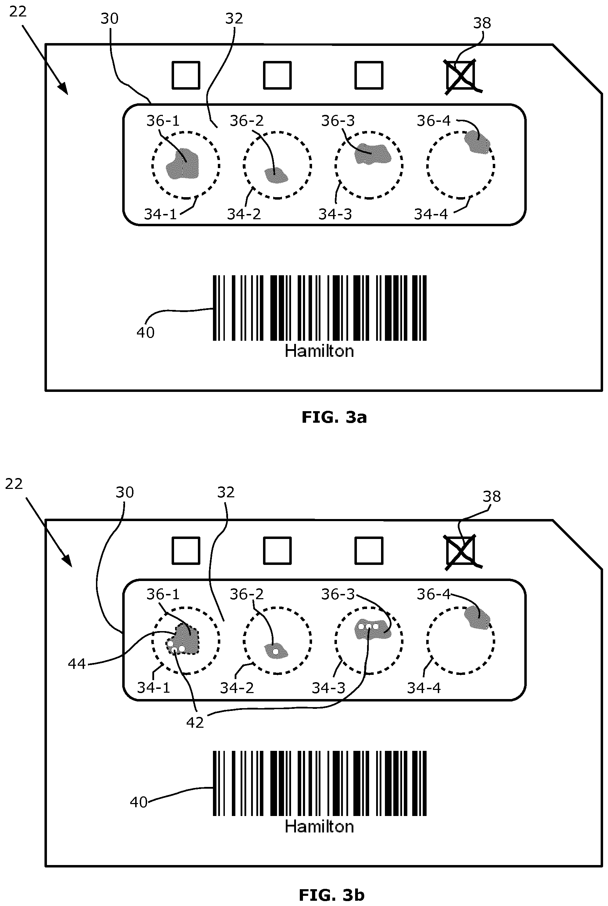

Auf der der Pipettiervorrichtung 502 gegenüberliegenden Seite des Trägers 50 ist eine Greifeinheit 300 angebracht, die ebenfalls beweglich in den beiden anderen Hauptrichtungen Y, Z ausgeführt ist. Diese Greifeinheit 300 ist im Rahmen dieser Anmeldung als zur Stanzvorrichtung 10 zugehörig anzusehen, auch wenn sie im vorliegenden Beispiel an einem gemeinsam mit der Pipettiervorrichtung 502 genutzten Träger 50 angebracht ist. Ferner umfasst die Stanzvorrichtung 10 als weitere Hauptkomponenten einen Stanzantrieb 14, ein Stanzmittel 110, eine Bildaufnahmevorrichtung 18 und eine Aufnahmeplatte 210. Ferner sind aus der Fig. 1 Magazine 20 für jeweils mehrere Probenkarten 22 (Fig. 3) ersichtlich. Mittels der Greifeinheit 300 wird eine Probenkarte aus einem Magazin 20 entnommen und dem Stanzmittel 110 zugeführt, so dass mittels des Stanzmittels 110 wenigstens ein Probenstück aus der betreffenden Probenkarte ausgestanzt werden kann.

Die Funktion des modularen Stanzmittels 110, das aufgrund seines eigenständigen Aufbaus in einfacher Weise von der Stanzvorrichtung 10 getrennt werden kann, wird im Rahmen dieser Anmeldung nur teilweise beschrieben. Für Details zur Ausgestaltung des modularen Stanzmittels (Stanzkopfs) 110 wird auf die von der Anmelderin zeitgleich eingereichte Anmeldung mit dem Titel "Stanzvorrichtung mit modularem Stanzmittel" (siehe EP2702383 A1) verwiesen, deren Inhalt zur Ausgestaltung des Stanzmittels durch Bezugnahme hier aufgenommen wird.

Ebenso wird im Rahmen dieser Anmeldung auf spezielle Merkmale der Aufnahmeplatte 210 nur teilweise eingegangen. Für Details zur Ausgestaltung dieser Aufnahmeplatte bzw. von einem durch die Aufnahmeplatte 210 abgedeckten, in Fig. 1 nicht sichtbaren Antrieb zur Positionierung von Aufnahmebehältern relativ zum Stanzmittel 110 wird auf die beiden zeitgleich eingereichten Anmeldungen mit dem Titel "Stanzvorrichtung mit Aufnahmeplatte" (siehe EP2702384 A1) und "Stanzvorrichtung mit beleuchteter Aufnahmeplatte" (siehe EP2702385 A1) verwiesen, deren beider Inhalt zur Ausgestaltung der Aufnahmeplatte und des von ihr abgedeckten Antriebs durch Bezugnahme hier aufgenommen wird.

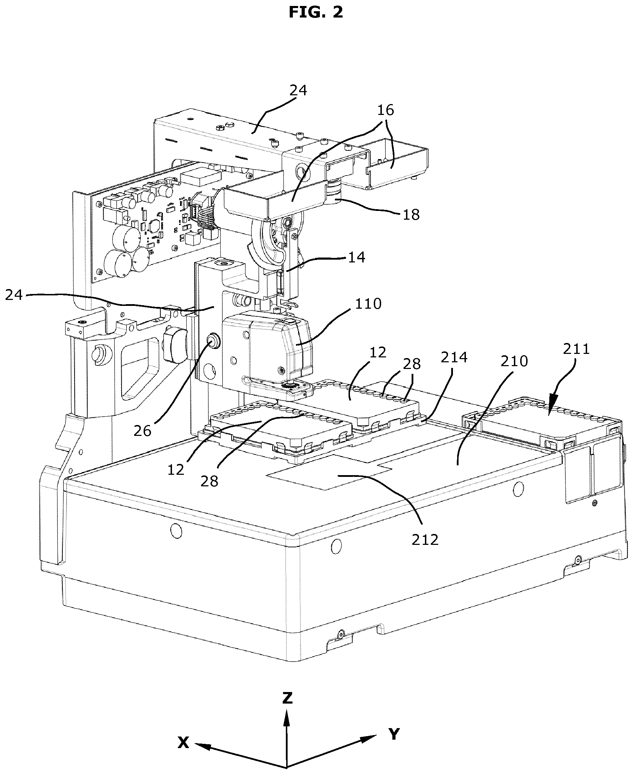

Fig. 2 zeigt in schematischer Perspektivdarstellung die Stanzvorrichtung 10 ohne Greifeinheit 300. Die Stanzvorrichtung 10 umfasst eine rahmenartige Struktur bzw. Tragkonstruktion 24, an welcher der Stanzantrieb 14 und die Bildaufnahmevorrichtung 18 befestigt sind und an welcher das Stanzmittel 110 abnehmbar als Stanzmittelmodul angebracht ist. In Fig. 2 ist der Zustand gezeigt, in dem das modulare Stanzmittel 110 mit der Struktur 24 der Stanzvorrichtung gekoppelt ist. Um das Stanzmittel 110 von der Struktur 24 abnehmen zu können, wird vorgeschlagen, dass ein Betätigungselement bzw. Druckknopf 26 betätigt werden kann, so dass ein zwischen Stanzmittel 110 und Tragkonstruktion 24 vorhandener Eingriff gelöst werden kann. Die Aufnahmeplatte 210 dient der Lagerung bzw. Abstützung von wenigstens einem Aufnahmebehälter 12, der vorzugsweise als Mikrotiterplatte mit einer bestimmten Anzahl Näpfen (Aufnahmevertiefungen) 28 versehen ist. Es können unterschiedliche Mikrotiterplatten zum Einsatz kommen und die Anzahl von Näpfen 28 ist ansich nicht beschränkt, außer im Hinblick darauf, dass ein aus einer Probenkarte ausgestanztes Probenstück in einem entsprechenden Napf 28 Platz hat.

Aus der Übersichtsdarstellung der Fig. 2 ist auch ersichtlich, dass die Bildaufnahmevorrichtung 18 im Wesentlichen vertikal oberhalb eines beleuchteten Bereichs 212 der Aufnahmeplatte 210 angeordnet ist. Dieser beleuchtete Bereich 212 wird bevorzugt durch eine in der Aufnahmeplatte aufgenommene bzw. auf deren Rückseite angeordnete Elektrolumineszenzfolie gebildet. Eine darauf angeordnete Mikrotiterplatte 12 kann von der EL-Folie 212 hinterleuchtet werden, so dass mittels der Bildaufnahmevorrichtung 18 ein Bild der hinterleuchteten Mikrotiterplatte 12 bzw. eines Teils von ihr erfasst werden kann. Die Mikrotiterplatte(n) 12 ist/sind auf der Aufnahmeplatte 210 in einem Transportrahmen 214 aufgenommen, der über hier nicht dargestellte Magneten mit einer unter der Aufnahmeplatte 210 befindlichen Antriebseinheit gekoppelt ist und mittels dieser Antriebseinheit auf der Aufnahmeplatte 210 relativ zum feststehenden Stanzmittel 110 bewegt werden kann. Hierdurch kann eine bestimmte Aufnahmevertiefung 28 eines Aufnahmebehälters 12 genau unterhalb des Stanzmittels 110 angeordnet werden, so dass ein ausgestanztes Probenstück in diese Aufnahmevertiefung hinfällt bzw. in dieser aufgenommen wird. Beidseitig der Bildaufnahmevorrichtung 18 sind Halterungen 16 vorgesehen für alternative Beleuchtungsmittel, welche einen unter der Bildaufnahmeeinrichtung 18 positionierten Gegenstand, vorzugsweise eine Probenkarte, von oben beleuchten, so dass bildverarbeitende Prozesse für die Probenkarte durchgeführt werden können, beispielsweise Erkennung eines Barcodes und dergleichen.

Fig.3 zeigt in den Teilfiguren a) und b) ein Beispiel einer Probenkarte 22. Die Probenkarte weist eine Art Öffnung 30 auf, in welcher ein saugfähiges Material 32, wie etwa eine Art Filterpapier oder dergleichen sichtbar ist. Auf dem saugfähigen Material ist wenigstens ein Probenbereich ausgewiesen, im vorliegenden Beispiel sind es vier solche Probenbereiche 34-1 bis 34-4, die als gestrichelte Kreise dargestellt sind. Wenn Proben, wie etwa Blut, Speichel oder aber auch andere Flüssigkeiten mittels der Probenkarte 22 gesammelt werden, sollen die Flüssigkeitsproben nach Möglichkeit innerhalb der markierten Probenbereiche 34-1 bis 34-4 abgegeben werden. Im vorliegenden Beispiel sind unterschiedlich große Proben 36-1 bis 36-4, beispielsweise Bluttropfen oder Speichelproben, in die entsprechenden Probenbereiche 34-1bis 34-4 abgegeben worden. Die Probe 36-4 liegt dabei nicht vollständig innerhalb der Markierung von Probenbereich 34-4, so dass diese Probe von einem Probengeber bzw. von medizinischem Personal entsprechend mit einem Kreuz 38 oberhalb des Probenbereichs 34-4 als ungültig gekennzeichnet worden ist. Unterhalb des saugfähigen Materials 32 ist auf der Karte noch eine Kodierung (Barcode, 2D-Barcode oder dergleichen) 40 vorgesehen, um eine Identifikation der Probenkarte und eine Zuordnung zu einem Probengeber, einem erfassenden Institut oder dergleichen zu ermöglichen. Auf der Probenkarte 22 können noch weitere Informationen enthalten bzw. aufgedruckt sein, wie etwa Herstellerangaben, Angaben zum Zweck der Karte oder zur Probenflüssigkeit etc. Die in flüssiger Form aufgebrachten Proben 36-1 bis 36-4 werden vom saugfähigen Material 32 aufgenommen und trocknen anschließend. Nach dem Trocknen können aus den Proben 36-1 bis 36-4 Probenstücke ausgestanzt werden mittels des Stanzmittels 110. Die Probenkarte 22 nach dem Ausstanzen von mehreren Probenstücken aus den Proben 36-1 bis 36-3 ist in der Fig. 3b durch die weisen Stanzlöcher 42 angedeutet. Wo und in welcher Reihenfolge das Ausstanzen von Probenstücken erfolgt kann beispielsweise mittels Bildverarbeitung festgelegt werden, wobei zum einen erkannt werden kann, ob eine Probe innerhalb des markierten Probenbereichs 34-1 bis 34-4 liegt (z.B. unter Verwendung des Kreuzes 38), wo die Probe 36-1 bis 36-4 innerhalb des Probenbereichs 34-1 bis 34-4 liegt und welche Begrenzung sie aufweist, was bei der Probe 36-1 durch die gestrichelte Linie 44 angedeutet ist. Auf Grundlage solcher Informationen und der gewünschten Anzahl auszustanzender Probenstücke kann dann ermittelt werden, wo Probenstücke ausgestanzt werden sollen. Dementsprechend kann die Probenkarte 22 dann relativ zum Stanzmittel positioniert werden, so dass die Probenstücke an den vorbestimmten Stellen ausgestanzt werden können. Die hier dargestellte Form der Probenkarte ist rein beispielhaft, die Proben karte kann ein anderes Format aufweisen, mehr oder weniger, kleinere oder größere Probenbereiche 34 aufweisen etc.

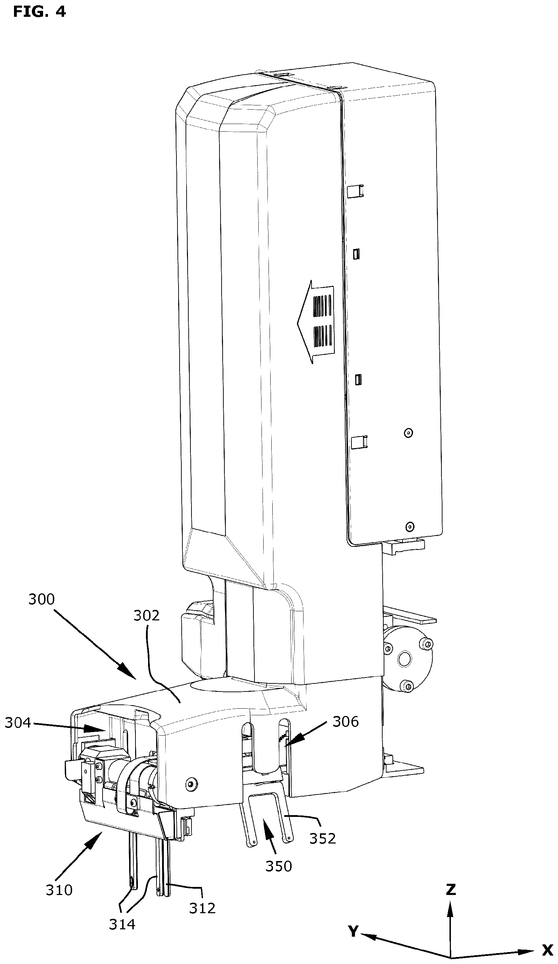

Fig. 4. zeigt die Greifeinheit 300 in vergrößerter Darstellung. Sie ist insgesamt in allen drei Hauptrichtungen X, Y, Z relativ zum Stanzmittel 110 (Fig. 1) beweglich. Dabei erfolgt die Bewegung in X-Richtung durch Verschiebung des Trägers 50 und die Bewegung in Y- bzw.-Z-Richtung durch eine relative Verschiebung der Greifeinheit 300 zum Träger 50 mittels entsprechender nicht sichtbarer Antriebe. Diese Antriebe bilden zusammen mit dem Antrieb des Trägers 50 die Antriebseinheit für die Bewegung der Greifeinheit 300 in den drei Hauptrichtungen X, Y, und Z.

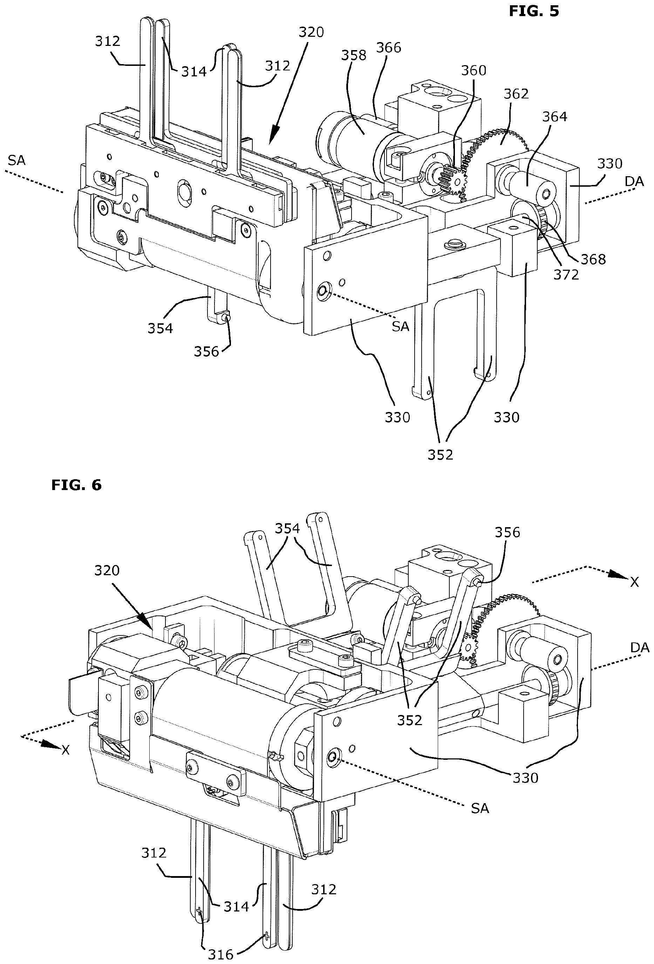

Um Probenkarten aus einem Magazin zu entnehmen, weist die Greifeinheit 300 ein Probenkartengreifmittel 310 auf mit Kartengreifern 312 und 314. Die Kartengreifer 312, 314 sind relativ zueinander beweglich, so dass sie voneinander wegbewegt, insbesondere verschwenkt werden können, um dazwischen einen spitzen Winkel als Öffnung zum Einführen einer Probenkarte zu bilden. Ist die Probenkarte zwischen den Kartengreifern 312, 314 aufgenommen, können diese wieder aufeinander zu bewegt werden, so dass die Probenkarte zwischen ihnen festgeklemmt und somit gehalten ist. Ferner umfasst die Greifeinheit ein Aufnahmebehältergreifmittel 350, von dem nur ein Behältergreifer 352 ersichtlich ist. Ein weiterer Behältergreifer 354 (Fig. 5) befindet sich bezogen auf die Darstellung der Fig. 4 auf einer hinteren nicht einsehbaren Seite der Greifeinheit 300. Um die Greifeinheit 300 bzw. um ihre jeweiligen Greifmittel 310, 350 und deren nachfolgend beschriebenen Greifantriebe zu schützen, ist ein Greifergehäuse 302 vorgesehen. Das Greifergehäuse 302 weist Öffnungen 304 und 306 auf, die derart ausgebildet sind, dass die gewünschten Bewegungen der jeweiligen Greifer 312, 314, 352, 354 nicht behindert werden.

Die Funktionsweise der beiden Greifmittel 310 und 350 wird nun unter Bezugnahme auf die Fig. 5 bis 10 beschrieben, die vereinfachte Perspektivdarstellungen bzw. zugehörige Schnittdarstellungen zeigen, in denen bestimmte Betriebszustände der Greifmittel 310 und 350 ersichtlich sind.

Die beiden Greifmittel 310 und 350 sind an einer gemeinsamen Rahmenkonstruktion 330 angebracht, welche wiederum selbst an einem nicht näher erläuterten Anschlussstück der Antriebseinheit für die Greifeinheit 300 angebracht ist, wobei dieses Anschlussstück mit dem Träger 50 verbunden und relativ zu diesem in Y- und Z-Richtung bewegliche ist gemeinsam mit der daran befestigten Greifeinheit 300.

Die Kartengreifer 312, 314 können mittels eines Kartengreiferantriebs 320 gemeinsam um eine Schwenkachse SA verschwenkt werden. In Fig. 5 befinden sich die Kartengreifer 312, 314 in einer Wartestellung, in der sie im Wesentlichen vertikal nach oben gerichtet sind. In dieser Wartestellung schränken die Kartengreifer 312, 314 die Bewegung der Greifeinheit 300 in keine der Hauptrichtungen X, Y, Z ein, so dass beispielsweise mittels der Behältergreifer 352, 354 ein Aufnahmebehälter 12 (Fig. 1, 2) ergriffen und transportiert werden kann. Um eine Probenkarte aus einem unterhalb der Greifeinheit 300 angeordneten Magazin 20 (Fig. 1) zu entnehmen, können die Kartengreifer 312, 314 in ihre Lade-/Entladestellung gemäß Fig. 6 verschwenkt werden, in welcher sie im Wesentlichen vertikal nach unten gerichtet sind. In dieser Stellung können die Kartengreifer 312, 314 durch Bewegung der gesamten Greifeinheit 300 in Z-Richtung nach unten in Richtung einer Probenkarte bewegt werden und diese nach ihrem Ergreifen in Z-Richtung nach oben aus dem Magazin entnehmen. Bei diesem Vorgang des Aufnehmens bzw. Zurückstellens einer Probenkarte aus einem bzw. in ein Magazin sind die Behältergreifer 352, 354 vorzugsweise in ihre in Fig. 6 dargestellte Wartestellung verschwenkt, so dass sie die Bewegung der Greifeinheit nach unten zur Probenkarte bzw. zum Magazin hin nicht behindern können.

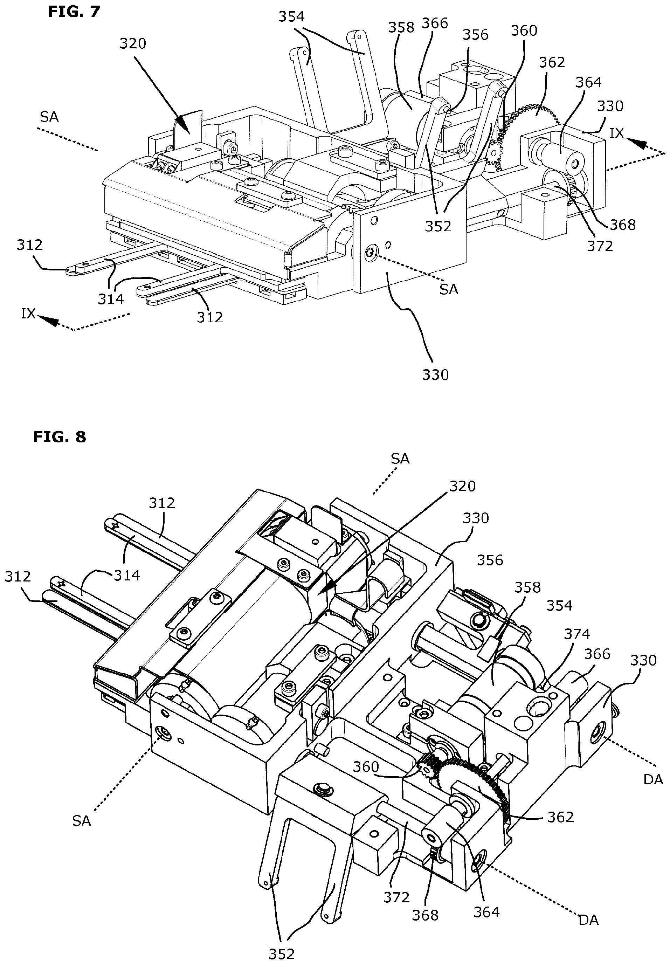

Eine durch die Kartengreifer 312, 314 ergriffene Probenkarte kann nach dem Herausziehen aus dem Magazin gemeinsam mit den sie haltenden Kartengreifern 312, 314 um die Schwenkachse SA verschwenkt werden, vorzugsweise in die Stanzstellung gemäß Fig. 7, in welcher die Kartengreifer 312, 314 und eine ggf. von ihnen gehaltene Probenkarte (nicht dargestellt) im Wesentlichen horizontal ausgerichtet sind. In dieser im Wesentlichen horizontalen Stellung kann die Probenkarte mittels der Greifeinheit in Richtung des Stanzmittels 110 transportiert werden und dort in dessen Aufnahmeöffnung eingeführt werden. Durch die Bewegung der Greifeinheit insbesondere in der X- und Y-Richtungen, kann die Probenkarte relativ zum Stanzmittel, insbesondere zu dessen Stempel, exakt ausgerichtet werden, so dass ein Probenstück an einer vorbestimmten Stellen der Probenkarte ausgestanzt werden kann. Vor dem Ausstanzen kann eine von den Kartengreifern 312, 314 gehaltene Probenkarte auch noch unterhalb der Bilderfassungsvorrichtung 18 (Fig. 1, 2) angeordnet werden, mittels welcher ein Bild der Probenkarte aufgenommen wird, das anschließend ausgewertet werden kann, um beispielsweise einen Identifizierungscode 40 (Fig. 3) oder Proben 36-1 bis 36-4 zu erkennen und daraus die Positionierung der Probenkarte relativ zum Stanzmittel 110 zu berechnen. Um auch die relative Position der Probenkarte zur Greifeinheit 300 bzw. zu den Kartengreifern 312, 314 bestimmen zu können, weisen die Kartengreifer 314 an ihrer Oberseite Positionierungskreuze 316, die mittels Bildverarbeitung gut erkennbar sind. Bei der Bildaufnahme der Probenkarte zwecks Analyse von darauf sichtbaren Elementen, wie Kodierung 40, Kreuz 38 (Fig. 3), Proben 36-1 bis 36-4, kann die Karte mittels in den Halterungen 16 (Fig. 2) vorhandenen Beleuchtungsmitteln, wie etwa LED's o.ä., von oben angestrahlt werden, um eine optimale Ausleuchtung zu gewährleisten und die Bilderkennung optimal durchführen zu können.

Nach dem Ausstanzen von wenigstens einem Probenstück aus der Probenkarte, ist es möglich, dass die Probenkarte zur Überprüfung über die Elektrolumineszenzfolie 212 der Aufnahmeplatte 210 gehalten wird und mittels der Bilderfassungsvorrichtung ein weiteres Bild der Probenkarte erfasst, in welchem das von der EL-Folie 212 hinterleuchtete ausgestanzte Loch in der Probenkarte einfach erkennbar ist. Wird beispielsweise eine EL-Folie 212 in einer bestimmten Farbe, wie etwa blau, grün oder rot, eingesetzt, stellen ausgestanzte Bereiche, durch die das farbige, insbesondere blaue, grüne oder rote Licht hindurchtritt, in der Probenkarte die einzigen in einer derartigen Farbe (blau, grün, rot) erscheinende Punkte in einem Bild dar. Das Detektieren von ausgestanzten Bereichen ist allerdings nicht nur unmittelbar nach dem Ausstanzen denkbar, sondern kann auch vor einem (weiteren) Stanzvorgang erfolgen, um zu überprüfen, ob die betreffende Karte bereits gestanzt worden ist und von welcher der Proben 36-1 bis 36-4 ein oder mehrere Probenstücke entnommen worden sind.

Sobald der Prozess für eine Probenkarte abgeschlossen ist, kann diese wieder an ihre vorherige Position im Magazin transportiert werden. Alternativ ist es denkbar, sie in einem anderen Magazin abzulegen, in welchem nur bereits verarbeitete Probenkarten enthalten sind. Anschließend kann eine neue Probenkarte aus dem Magazin entnommen und dem Stanzprozess zugeführt werden.

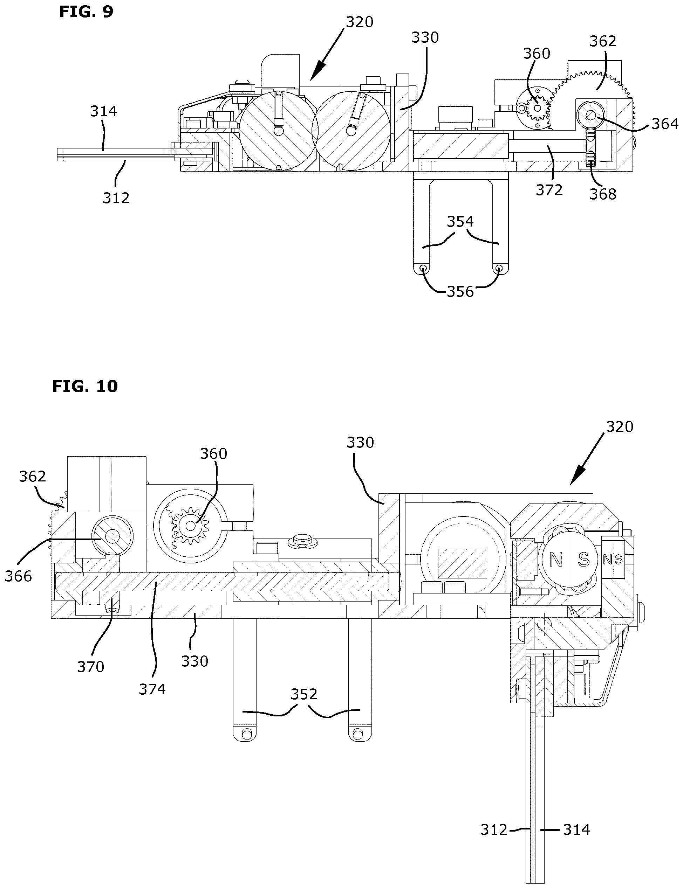

Die Behältergreifer 352, 354 sind in Fig. 5 in ihrer Greifstellung dargestellt, in welcher sie im Wesentlichen vertikal nach unten gerichtet sind und einen Aufnahmebehälter 12 (Fig. 1, 2) zwischen sich klemmend aufnehmen. Um eine optimale Kopplung zwischen Aufnahmebehälter 12 und den Greifern 352, 354 zu ermöglichen weisen die Greifer an Ihren dem Aufnahmebehälter zugewandten Seiten Eingriffszapfen 356 auf, die in entsprechende Eingriffslöcher am Aufnahmebehälter eingreifen können. Die beiden Behältergreifer 352, 254 sind um jeweilige zueinander parallele Drehachsen DA verschwenkbar, so dass sie von ihrer Greifstellung (Fig. 5) in eine Wartestellung verschwenkt werden können, in der sie nach schräg oben gerichtet sind (Fig. 6). Die Schwenkbewegung der beiden Behältergreifer 352 und 354 erfolgt synchron mittels eines Motors 358 (Elektromotor), dessen Ritzel 360 mit einem Zahnrad 362 kämmt. Das Zahnrad 362 weist auf seiner Drehachse beidseitig Schneckengetriebe 364 und 366 auf, welche mit Zahnrädern 368 und 370 ein Eingriff sind, die an Stangen 372, 374 angebracht sind, an denen die Behältergreifer 352, 354 drehfest befestigt sind. Diese Antriebsmechanik für die Behältergreifer 352, 354 ist auch aus den beiden Schnittdarstellungen der Fig. 9 und 10 ersichtlich.

Ein durch die Behältergreifer 352, 354 ergriffener Aufnahmebehälter kann mittels der Greifeinheit 300 an beliebigen Positionen abgestellt werden, um anschließend beim Stanzen oder beim Befüllen mit Flüssigkeit mittels der Pipettiervorrichtung 502 verwendet zu werden. Dabei kommt die Greifeinheit auch zum Einsatz, um bezogen auf die Fig. 1 und 2 einen Probenbehälter 12 von einer Position zwischen Probenkartenmagazinen 20 (links) und Pipettierspitzenbehältern (rechts) zu einer Position 211 neben der Aufnahmeplatte 210 oder zu einer Position auf dem Transportrahmen 214 auf der Aufnahmeplatte 210 zu transportieren. Um beispielsweise eine Übergabe eines Aufnahmebehälters 12 in den Transportrahmen 214 zu ermöglichen, kann der Transportrahmen 214 bezogen auf die Fig. 2 in eine Position auf der Aufnahmeplatte 210 bewegt, in welcher er nach oben hin nicht von einem Element der Stanzvorrichtung 10, wie etwa Stanzmittel 110, Bilderfassungsvorrichtung 18 oder dergleichen überdeckt ist, so dass die Greifeinheit ohne Behinderung über dem Transportrahmen 214 positioniert werden kann, um einen Aufnahmebehälter abzusetzen bzw. aufzunehmen.

In Fig. 8 sind die Kartengreifer 312, 314 in der Stanzstellung (analog zur Fig. 7 und 9) und die Behältergreifer 352, 354 sind ein einer Bereitschaftsstellung unmittelbar vor dem Ergreifen bzw. nach dem Abstellen eines Aufnahmebehälter dargestellt. In dieser Darstellung sind auch die Positionierungskreuze 316 an der Oberseite des Kartengreifers 314 gut sichtbar.

Aus der Schnittdarstellung der Fig. 10 ist ferner ersichtlich, dass als Greiferantrieb 320 für die Kartengreifer 312, 314 ein Schrittmotor zum Einsatz kommen kann, der das Verschwenken der Kartengreifer 312, 314 in die unterschiedlichen Stellungen ermöglicht.

Das Ansteuern der jeweiligen Motoren 320 bzw. 358 zum Betätigen der betreffenden Greifer 312, 314 und 352, 354 erfolgt mittels eine Steuereinheit der Stanzvorrichtung, die in den Figuren nicht dargestellt ist. Bevorzugt ist die Steuerung derart ausgelegt, dass diejenigen Greifer 312, 314 und 352, 354, die gerade keine Greif- bzw. Transportfunktion ausüben, in ihre Wartestellung verschwenkt sind. Dies kann bevorzugt auch als Bedingung in der Ansteuerung enthalten sein, so dass eine gegenseitige Behinderung der Greifer 312, 314 und 352, 354 ausgeschlossen werden kann. Die Steuereinheit ist auch mit weiteren Komponenten der Stanzvorrichtung 10, wie etwa Stanzmittel 110, Bilderfassungvorrichtung 18 etc. verbunden, um diese ebenfalls in der gewünschten Weise ansteuern zu können. In der Regel handelt es sich bei der Steuereinheit um einen Computer mit entsprechender Software zum Ansteuern der Stanzvorrichtung 10 und der optionalen Dosiervorrichtung 500.

Die hier vorgestellte Greifeinheit 300 bietet eine große Flexibilität beim Einsatz sowohl zum Handhaben von Probenkarten, als auch zum Handhaben von Aufnahmebehältern. In Kombination mit einer einer Dosiervorrichtung ist es ferner möglich, bereits mit einer Flüssigkeit befüllte Aufnahmebehälter der Stanzvorrichtung automatisiert zuzuführen und diesen nach dem Befüllen mit ausgestanzten Probenstücken der weiteren Verarbeitung zuzuführen. Es ist denkbar, dass die Greifeinheit 300 einen Aufnahmebehälter auch an eine weitere Station einer Gesamtvorrichtung transportieren kann, wie etwa eine Station zum Zentrifugieren oder eine Station, an welcher die Aufnahmebehälter verschlossen werden. Selbstverständlich kann die hier vorgestellte Greifeinheit 300 auch unabhängig vom Vorhandensein einer Dosiervorrichtung nur im Rahmen einer Stanzvorrichtung 10 eingesetzt werden.

## Patentansprüche

1. Stanzvorrichtung zum Verarbeiten von auf einer Probenkarte (22) aufgetragenen, insbesondere getrockneten Proben (36-1,...,36-4), vorzugsweise von DNA enthaltenden Flüssigkeiten wie Blut, Speichel und dergleichen, umfassend
wenigstens ein Stanzmittel (110) mit einem Stempel und einem Unterwerkzeug, wobei der Stempel zwischen einer vom Unterwerkzeug entfernten Ruhestellung und einer dem Unterwerkzeug angenäherten Stanzstellung beweglich ist, und wobei das Stanzmittel (110) eine Aufnahmeöffnung aufweist, in welche eine Probenkarte (22) aus einem Probenkartenbehälter (20) mittels einer beweglichen Greifeinheit (300) der Stanzvorrichtung (10) einführbar und relativ zum Stanzmittel (110) positionierbar ist,
und einen mit dem Stempel des Stanzmittels (110) koppelbaren oder gekoppelten Stanzantrieb (14), durch den die Bewegung des Stempels zwischen Ruhestellung und Stanzstellung angetrieben wird, wobei das Stanzmittel (110) derart eingerichtet ist, dass ein aus der Probenkarte (22) ausgestanztes Probenstück an einer Austrittsöffnung des Unterwerkzeugs in eine Aufnahmevertiefung eines unterhalb des Stanzmittels (110) angeordneten Aufnahmebehälters (12) abgegeben werden kann,
**dadurch gekennzeichnet, dass** die Greifeinheit (300) ein Probekartengreifmittel (310) und ein Aufnahmebehältergreifmittel (350) umfasst, welche mittels einer gemeinsamen Rahmenkonstruktion (330) an der Greifeinheit (300) angebracht sind und mittels einer Antriebseinheit in drei zueinander orthogonale Hauptrichtungen (X, Y, Z) gemeinsam beweglich sind.

2. Stanzvorrichtung nach Anspruch 1, **dadurch gekennzeichnet, dass** das Probenkartengreifmittel (310) und das Aufnahmebehältergreifmittel (350) einen jeweiligen Greiferantrieb (320; 358) aufweisen mittels welchem zugehörige Greifer (312, 314; 352, 354) des Probenkartengreifmittels (310) und des Aufnahmebehältergreifmittels (350) zwischen einer Öffnungsstellung und einer Schließstellung beweglich, insbesondere verschwenkbar sind.

3. Stanzvorrichtung nach Anspruch 2, **dadurch gekennzeichnet, dass** das Probenkartengreifmittel (310), insbesondere dessen zugehörige Greifer, (312, 314) mittels des zugehörigen Greiferantriebs (320) um eine Schwenkachse (SA) verschwenkbar ist/sind, derart, dass es zwischen einer dem Probenkartenbehälter (20) zugewandten Lade-/ Entladestellung und einer vom Probenkartenbehälter (20) abgewandten Wartestellung verschwenkbar ist.

4. Stanzvorrichtung nach Anspruch 3, **dadurch gekennzeichnet, dass** das Probekartengreifmittel (310) ferner in eine zwischen der Lade-/Entladestellung und der Wartestellung liegende Stanzstellung verschwenkbar ist, in welcher eine durch die zugehörigen Greifer (312, 314) ergriffene Probenkarte (22) dem Stanzmittel (110) zuführbar ist.

5. Stanzvorrichtung nach Anspruch 3 oder 4, **dadurch gekennzeichnet**, die das Probenkartengreifmittel (310) und das Aufnahmebehältergreifmittel (350) derart angesteuert sind von einer Steuereinheit der Stanzvorrichtung (10), dass beim Ergreifen und Transportieren eines Aufnahmebehälters (12) mittels des Aufnahmebehältergreifmittels (350) das Probenkartengreifmittel (310) in seine Wartestellung verschwenkt ist.

6. Stanzvorrichtung nach einem der vorhergehenden Ansprüche, **dadurch gekennzeichnet, dass** sie eine Aufnahmebehälter (12) abstützende Aufnahmeplatte (210) mit einer wenigstens einen Teil der Aufnahmeplatte beleuchtenden Lichtquelle (212) aufweist, wobei die Lichtquelle (212) derart angeordnet ist, dass wenigstens ein Teil eines auf der Aufnahmeplatte (210) befindlichen Aufnahmebehälters (12), insbesondere von in ihm vorgesehen Aufnahmevertiefungen (28), aus Richtung der Aufnahmeplatte (210), insbesondere von unten beleuchtet werden kann.

7. Stanzvorrichtung nach Anspruch 6, **dadurch gekennzeichnet, dass** als Lichtquelle (212) wenigstens eine Elektrolumineszenz-Folie an der Aufnahmeplatte (210) vorgesehen ist, wobei vorzugsweise die Aufnahmeplatte (210) eine transparente Platte, vorzugsweise Glasplatte ist, und wobei die EL-Folie (212) vorzugsweise an der Unterseite der Aufnahmeplatte (210) angeordnet ist.

8. Stanzvorrichtung nach Anspruch 6 oder 7, **dadurch gekennzeichnet, dass** sie einen auf der Aufnahmeplatte (210) aufliegenden, in der Plattenebene beweglichen Transportrahmen (214) aufweist, in welchem wenigstens ein Aufnahmebehälter (12) aufnehmbar ist.

9. Stanzvorrichtung nach Anspruch 8, **dadurch gekennzeichnet, dass** die Aufnahmeplatte (210) eine Abdeckung eines Gehäuses für eine Antriebseinheit bildet, welche die Bewegung des Transportrahmens (214) auf der Aufnahmeplatte (210) ermöglicht, wobei vorzugsweise der Transportrahmen (214) berührungslos mittels Magneten mit der durch die Aufnahmeplatte (210) abgedeckten Antriebseinheit gekoppelt ist.

10. Stanzvorrichtung nach einem der vorhergehenden Ansprüche, **dadurch gekennzeichnet, dass** mittels der Greifeinheit (300) Aufnahmebehälter (12) von Wartepositionen (211) außerhalb der Aufnahmeplatte (210) zu Verarbeitungspositionen auf der Aufnahmeplatte (210) und umgekehrt transportierbar sind.

11. Stanzvorrichtung nach Anspruch 8 oder 10, **dadurch gekennzeichnet, dass** die Greifeinheit (300) derart ausgeführt ist, dass Aufnahmebehälter (12) mittels der Greifeinheit (300) zum Transportrahmen (214) hin und von diesem weg bewegt werden können, wobei ein betreffender Aufnahmebehälter (12) mittels des Aufnahmebehältergreifmittels (350) beim Transport gehalten ist.

12. Stanzvorrichtung nach einem der vorhergehenden Ansprüche, **dadurch gekennzeichnet, dass** sie mit einer Dosiervorrichtung (500) kombiniert ist, wobei die Greifeinheit (300) an einem in einer der Hauptrichtungen (X) beweglichen Träger (50) angebracht ist, an welchem zusätzlich eine in den beiden anderen Hauptrichtungen (Y, Z) bewegliche Pipettiervorrichtung (502) der Dosiervorrichtung (500) angebracht ist, derart, dass die Greifeinheit (300) und die Pipettiervorrichtung (502) entlang der einen Hauptrichtung (X) gleichzeitig bewegt werden.

## Claims

1. A punching device for processing, in particular dried, samples (36-1,...,36-4) applied to a sample card (22), preferably of liquids containing DNA such as blood, saliva and the like, comprising
at least one punching means (110) having a punch and a lower die, wherein the punch is movable between a rest position in which it is away from the lower die and a punching position in which it is close to the lower die, and wherein the punching means (110) has a receiving opening into which a sample card (22) from a sample card container (20) is introducible by means of a movable gripper unit (300) of the punching device (10) and is positionable relative to the punching means (110),
and a punching drive (14) which is couplable or coupled to the punch of the punching means (110) and by which the movement of the punch between the rest position and the punching position is driven, wherein the punching means (110) are set up such that a sample piece punched out of the sample card (22) can be dispensed at an outlet opening of the lower die into a receiving recess in a receiving container (12) arranged beneath the punching means (110),
**characterized in that** the gripper unit (300) comprises a sample card gripper means (310) and a receiving container gripper means (350) which are fitted on the gripper unit (300) by means of a common frame structure and which are movable jointly by means of a drive unit in three main directions (X, Y, Z) that are orthogonal to one another.

2. The punching device according to claim 1, **characterized in that** the sample card gripper means (310) and the receiving container gripper means (350) each have a respective gripper drive (320; 358), by means of which associated grippers (312, 314; 352, 354) of the sample card gripper means (310) and of the receiving container gripper means (350) are movable, in particular pivotable, between an open position and a closed position.

3. The punching device according to claim 2, **characterized in that** the sample card gripper means (310), in particular the associated grippers (312, 314) thereof, are pivotable about a pivot axis (SA) by means of the associated gripper drive (320), such that the gripper means (310) is pivotable between a loading/unloading position facing the sample card container (20) and a waiting position facing away from the sample card container (20).

4. The punching device according to claim 3, **characterized in that** the sample card gripper means (310) is furthermore pivotable into a punching position located between the loading/unloading position and the waiting position, in which punching position a sample card (22) grasped by the associated grippers (312, 314) is able to be fed to the punching means (110).

5. The punching device according to claim 3 or 4, **characterized in that** the sample card gripper means (310) and the receiving container gripper means (350) are actuated by a control unit of the punching device (10) such that when a receiving container (12) is grasped and transported by means of the receiving container gripper means (350) the sample card gripper means (310) has been pivoted into its waiting position.

6. The punching device according to one of the preceding claims, **characterized in that** it has a receiving plate (210) supporting a receiving container (12) and having a light source (212) illuminating at least a part of the receiving plate, wherein the light source (212) is arranged such that at least a part of a receiving container (12) located on the receiving plate (210), in particular of receiving recesses (28) provided in said receiving container (12), can be illuminated from the direction of the receiving plate (210), in particular from below.

7. The punching device according to claim 6, **characterized in that** at least one electroluminescent film is provided as light source (212) on the receiving plate (210), wherein preferably the receiving plate (210) is a transparent plate, preferably a glass plate, and wherein the EL film (212) is arranged preferably on the underside of the receiving plate (210).

8. The punching device according to claim 6 or 7, **characterized in that** it has a transport frame (214) which rests on the receiving plate (210), is movable in the plate plane and in which at least one receiving container (12) is receivable.

9. The punching device according to claim 8, **characterized in that** the receiving plate (210) forms a cover of a housing for a drive unit which allows the movement of the transport frame (214) on the receiving plate (210), wherein preferably the transport frame (214) is coupled in a contactless manner by means of magnets to the drive unit covered by the receiving plate (210).

10. The punching device according to one of the preceding claims, **characterized in that** receiving containers (12) are transportable by means of the gripper unit (300) from waiting positions (211) outside the receiving plate (210) to processing positions on the receiving plate (210) and vice versa.

11. The punching device according to claims 8 or 10, **characterized in that** the gripper unit (300) is configured such that receiving containers (12) can be moved toward and away from the transport frame (214) by means of the gripper unit (300), wherein a receiving container (12) in question is held by means of the receiving container gripper means (350) during transport.

12. The punching device according to one of the preceding claims, **characterized in that** it is combined with a metering device (500), wherein the gripper unit (300) is fitted on a support (50) which is movable in one of the main directions (X) and on which a pipetting device (502), which is movable in the two other main directions (Y, Z), of the metering device (500) is additionally fitted, such that the gripper unit (300) and the pipetting device (502) are moved simultaneously in the one main direction (X).

## Revendications

1. Dispositif de découpage pour traiter des échantillons (36-1,...,36-4), en particulier séchés, appliqués sur une carte d'échantillons (22), de préférence des liquides contenant un ADN tels que du sang, de la salive, etc., comprenant
au moins un moyen de découpage (110) avec un poinçon et un outil inférieur, dans lequel le poinçon est mobile entre une position de repos éloignée de l'outil inférieur et une position de découpage rapprochée de l'outil inférieur, et dans lequel le moyen de découpage (110) présente une ouverture de réception dans laquelle une carte d'échantillons (22) est introductible depuis d'un récipient de cartes d'échantillons (20), à l'aide d'une unité de préhension mobile (300) du dispositif de découpage (10) et est positionnable par rapport au moyen de découpage (110),
et un entraînement de découpage (14) couplable ou couplé au poinçon du moyen de découpage (110) et grâce auquel le mouvement du poinçon entre la position de repos et la position de découpage (14) est entraîné, dans lequel le moyen de découpage (110) est installé de telle sorte qu'une partie d'échantillon découpée dans la carte d'échantillons (22) puisse être déchargée en une ouverture de sortie de l'outil inférieur, dans un creux de réception d'un récipient de réception (12) disposé au-dessous du moyen de découpage (110),
**caractérisé en ce que** l'unité de préhension (300) comprend un moyen de préhension pour carte d'échantillons (310) et un moyen de préhension pour récipient de réception (350) qui sont montés sur l'unité de préhension (300) à l'aide d'une construction de cadre commune (330) et qui sont mobiles conjointement dans trois directions principales (X, Y, Z) orthogonales les unes aux autres à l'aide d'une unité d'entraînement.

2. Dispositif de découpage selon la revendication 1, **caractérisé en ce que** le moyen de préhension pour carte d'échantillons (310) et le moyen de préhension pour récipient de réception (350) comportent un entraînement d'organes de préhension (320 ; 358) respectif à l'aide duquel des organes de préhension associés (312, 314 ; 352, 354) du moyen de préhension pour carte d'échantillons (310) et du moyen de préhension pour récipient de réception (350) sont mobiles, en particulier pivotants, entre une position d'ouverture et une position de fermeture.

3. Dispositif de découpage selon la revendication 2, **caractérisé en ce que** le moyen de préhension pour carte d'échantillons (310), en particulier ses organes de préhension associés (312, 314), est/sont pivotables autour d'un axe de pivotement (SA) à l'aide de l'entraînement d'organes de préhension associé (320), de manière à pouvoir pivoter entre une position de chargement/déchargement tournée vers le récipient de cartes d'échantillons (20) et une position d'attente opposée au récipient de cartes d'échantillons (20).

4. Dispositif de découpage selon la revendication 3, **caractérisé en ce que** le moyen de préhension pour carte d'échantillon (310) est également pivotable jusqu'à une position de découpage qui est située entre la position de chargement/déchargement et la position d'attente et dans laquelle une carte d'échantillons (22) saisie par les organes de préhension (312, 314) associés est apte à être amenée jusqu'au moyen de découpage (110).

5. Dispositif de découpage selon la revendication 3 ou 4, **caractérisé en ce que** le moyen de préhension pour carte d'échantillons (310) et le moyen de préhension pour récipient de réception (350) sont commandés par une unité de commande du dispositif de découpage (10) de telle sorte que lorsqu'un récipient de réception (12) est saisi et transporté à l'aide du moyen de préhension pour récipient de réception (350), le moyen de préhension pour carte d'échantillons (310) pivote jusqu'à sa position d'attente.

6. Dispositif de découpage selon l'une des revendications précédentes, **caractérisé en ce qu'**il comporte une plaque de réception (210) supportant des récipients de réception (12), avec une source lumineuse (212) qui éclaire une partie au moins de la plaque de réception, dans lequel la source lumineuse (212) est disposée de telle sorte qu'une partie au moins d'un récipient de réception (12) se trouvant sur la plaque de réception (210), notamment ses creux de réception (28) prévus dans le récipient de réception (12), puisse être éclairée en direction de la plaque de réception (210), en particulier du dessous.

7. Dispositif de découpage selon la revendication 6, **caractérisé en ce qu'**il est prévu comme source lumineuse (212) au moins un film électroluminescent sur la plaque de réception (210), dans lequel la plaque de réception (210) est de préférence une plaque transparente, de préférence une plaque de verre, et dans lequel le film électroluminescent (212) est disposé de préférence sur le côté inférieur de la plaque de réception (210).

8. Dispositif de découpage selon la revendication 6 ou 7, **caractérisé en ce qu'**il comporte un cadre de transport (214) posé sur la plaque de réception (210) et mobile dans le plan de la plaque, dans lequel au moins un récipient de réception (12) est apte à être reçu.

9. Dispositif de découpage selon la revendication 8, **caractérisé en ce que** la plaque de réception (210) forme un recouvrement d'un boîtier pour une unité d'entraînement qui permet le mouvement du cadre de transport (214) sur la plaque de réception (210), dans lequel de préférence le cadre de transport (214) est couplé sans contact, à l'aide d'aimants, à l'unité d'entraînement couverte par la plaque de réception (210).

10. Dispositif de découpage selon l'une des revendications précédentes, **caractérisé en ce qu'**à l'aide de l'unité de préhension (300), des récipients de réception (12) sont transportables de positions d'attente (211) à l'extérieur de la plaque de réception (210) jusqu'à des positions de traitement sur la plaque de réception (210) et inversement.

11. Dispositif de découpage selon la revendication 8 ou 10, **caractérisé en ce que** l'unité de préhension (300) est réalisée de telle sorte que des récipients de réception (12) puissent être déplacés à l'aide de l'unité de préhension (300) en direction du cadre de transport (214) et depuis celui-ci, dans lequel un récipient de réception (12) concerné est tenu à l'aide du moyen de préhension pour récipient de réception (350) pendant le transport.

12. Dispositif de découpage selon l'une des revendications précédentes, **caractérisé en ce qu'**il est combiné à un dispositif de dosage (500), dans lequel l'unité de préhension (300) est montée sur un support (50) qui est mobile dans l'une des directions principales (X) et sur lequel est monté en supplément un dispositif de pipetage (502) du dispositif de dosage (500) qui est mobile dans les deux autres directions principales (Y, Z) de telle sorte que l'unité de préhension (300) et le dispositif de pipetage (502) soient déplacés simultanément le long de l'une (X) des directions principales.
